# EUROPEAN PATENT SPECIFICATION

(11) **EP 3 217 163 B1**
(45) Date of publication and mention of the grant of the patent: **31.05.2023**
(21) Application number: 15901874.6
(22) Date of filing: 02.09.2015
(51) Int. Cl.: G01N 21/53, G01N 21/15

(54) **ANALYSIS DEVICE AND EXHAUST GAS TREATMENT DEVICE**
ANALYSEVORRICHTUNG UND ABGASVERARBEITUNGSVORRICHTUNG
DISPOSITIF D'ANALYSE ET DISPOSITIF DE TRAITEMENT DE GAZ D'ÉCHAPPEMENT

(43) Date of publication of application: 13.09.2017
(73) Proprietor: Fuji Electric Co., Ltd., Kawasaki-shi Kanagawa 210-9530 (JP)
(72) Inventor: HIGASHI, Ryoichi, Kawasaki-shi Kanagawa 210-9530 (JP); YAMAMOTO Tsutomu, Kawasaki-shi Kanagawa 210-9530 (JP); AKAO Kozo, Kawasaki-shi Kanagawa 210-9530 (JP); OKADA Michiyasu, Kawasaki-shi Kanagawa 210-9530 (JP); HIGASHI, Ryoichi, Kawasaki-shi, Kanagawa 210-9530 (JP); YAMAMOTO Tsutomu, Kawasaki-shi, Kanagawa 210-9530 (JP); AKAO Kozo, Kawasaki-shi, Kanagawa 210-9530 (JP); OKADA Michiyasu, Kawasaki-shi, Kanagawa 210-9530 (JP); HIGASHI, Ryoichi, Kawasaki-shi, Kanagawa 210-9530 (JP); YAMAMOTO Tsutomu, Kawasaki-shi, Kanagawa 210-9530 (JP); OKADA Michiyasu, Kawasaki-shi, Kanagawa 210-9530 (JP); HIGASHI, Ryoichi, Kawasaki-shi, Kanagawa 210-9530 (JP); YAMAMOTO Tsutomu, Kawasaki-shi, Kanagawa 210-9530 (JP); OKADA Michiyasu, Kawasaki-shi, Kanagawa 210-9530 (JP); HIGASHI, Ryoichi, Kawasaki-shi, Kanagawa 210-9530 (JP); YAMAMOTO Tsutomu, Kawasaki-shi, Kanagawa 210-9530 (JP); YAMAMOTO Tsutomu, Kawasaki-shi, Kanagawa 210-9530 (JP); OKADA Michiyasu, Kawasaki-shi, Kanagawa 210-9530 (JP); HIGASHI, Ryoichi, Kawasaki-shi, Kanagawa 210-9530 (JP); YAMAMOTO Tsutomu, Kawasaki-shi, Kanagawa 210-9530 (JP); YAMAMOTO Tsutomu, Kawasaki-shi, Kanagawa 210-9530 (JP); OKADA Michiyasu, Kawasaki-shi, Kanagawa 210-9530 (JP); HIGASHI, Ryoichi, Kawasaki-shi, Kanagawa 210-9530 (JP); YAMAMOTO Tsutomu, Kawasaki-shi, Kanagawa 210-9530 (JP)
(74) Representative: MERH-IP Matias Erny Reichl Hoffmann Patentanwälte PartG mbB
(86) International application number: PCT/JP2015/074996
(87) International publication number: WO 2017/037899

(56) References cited:
- EP-A1- 2 695 952
- EP-A2- 2 416 146
- WO-A1-2013/179432
- GB-A- 877 918
- JP-A- S5 393 081
- JP-A- 2012 053 038
- KR-B1- 101 258 051
- US-A- 4 078 896

## Description

### BACKGROUND

### 1. TECHNICAL FIELD

The present invention relates to an analyzing apparatus and an exhaust gas processing system.

### 2. RELATED ART

Conventionally, as an apparatus for analyzing the concentration of a prescribed component contained in a measurement target gas passing through a flue, an apparatus is known that irradiates the measurement target gas with laser light via connecting tubes connected to the flue, as shown in Patent Document 1, for example. An analyzing apparatus analyzes the concentration of the prescribed component based on the amount of the laser light absorbed by the measurement target gas.
Patent Document 1: Japanese Patent Application Publication No. 2013-101067
EP 2416146 A2 discloses a laser based probe for gas analysis including a tubular member with sample gas inflow portions. The sample gas inflow portions are flanked by through-holes in order to prevent entry of purge gas.
EP 2695952 A1 discloses a laser type gas analyzer with a measurement space between two tubular members guiding light. The shape of the tubular members is designed so as to avoid entrance of sample gas from the measurement space into the tubular members, e.g. by a bevelled end. GB877918 discloses a laser based gas analyzer with a bevelled tube and through holes. The tube is arranged to measure gases in a duct exhibiting negative pressure. The through holes serve to avoid heavy deposits of dust in the bevelled tube. To this end the tube contains through holes positioned outside the duct. The negative pressure causes air to be sucked in via the through holes and to be drawn out through the bevelled end of the tube.

It is preferable that as little of the measurement target gas as possible enters into the connecting tubes.

### SUMMARY

The invention is directed to an analyzing apparatus and an exhaust gas processing apparatus as defined in the appended claims.

The optical unit may include a first optical unit having a function for emitting the laser light to the flue. The optical unit may include a second optical unit having a function for receiving the laser light emitted from the first optical unit and passed through the flue. The connecting tube may be provided respectively for each of the first optical unit and the second optical unit.

The optical unit may include a first optical unit having a function for emitting the laser light to the flue. The optical unit may include a second optical unit having a function for receiving the laser light that has been emitted from the first optical unit and reflected after passing through at least a portion of the flue. The connecting tube may be provided in common for the first optical unit and the second optical unit.

The connecting tube may be provided with an introduction hole introducing a purge gas into the connecting tube, farther on the optical unit side than the through-hole. The connecting tube is provided with a notch including at least a range opposite the through-hole from an end portion on a side opposite the optical unit in the tube wall on a side opposite the through-hole. The connecting tube includes an open region opposite the through-hole in the tube wall on a side opposite the through-hole, and a clipped portion with a larger area than the through-hole is provided. The open region is formed by the clipped portion.

At least one of the through-holes may be provided on the optical unit side of a center of a range formed by the open region, in a length direction of the connecting tube. A plurality of the through-holes may be provided along a length direction of the connecting tube. A plurality of the through-holes may be provided along a circumferential direction of the connecting tube.

A diameter of the through-hole may be greater than or equal to 1/10 of a diameter of the connecting tube and less than or equal to 1/2 of the diameter of the connecting tube. A penetration direction in which the through-hole penetrates through the tube wall may have a slope on an insertion end side of the connecting tube that is inserted into the flue, relative to a direction orthogonal to a length direction of the connecting tube.

The analyzing apparatus may further comprise a purge gas introducing section that introduces the purge gas into the connecting tube from the introduction hole. The purge gas introducing section may increase a flow rate of the purge gas in each predetermined interval.

The connecting tube may have a cross-sectional shape that is streamlined as seen from a direction of an optical axis of the laser light. An optical axis of the laser light may be provided on the through-hole side of a center of the connecting tube in a height direction. The through-hole may have a tapered shape with an opening on an inner side of the connecting tube that is larger than an opening in an outer side of the connecting tube.

An exhaust gas processing apparatus that processes exhaust gas may comprise a flue that passes the exhaust gas; and an analyzing apparatus according to claim 1.

### BRIEF DESCRIPTION OF THE DRAWINGS

Fig. 1 is a schematic view of an exemplary analyzing apparatus 100 according to an embodiment of the present invention.
Fig. 2A shows analytical results of a concentration distribution of the gas under measurement intruding into the connecting tube 20 in a case where the through-hole 24 is not included.
Fig. 2B shows analytical results of a concentration distribution of the gas under measurement intruding into the connecting tube 20 in a case where the through-hole 24 is included.
Fig. 3A schematically shows the gas flow around the connecting tube 20 in a case where the through-hole 24 is not included.
Fig. 3B schematically shows the gas flow around the connecting tube 20 in a case where the through-hole 24 is included.
Fig. 4A shows an exemplary structure near the end portion 42 which does not fall under the scope of the claims.
Fig. 4B shows an exemplary structure near the end portion 42.
Fig. 4C shows an exemplary structure near the end portion 42.
Fig. 4D shows an exemplary structure near the end portion 42.
Fig. 5 is a planar view of an exemplary structure of the tube wall 22-1.
Fig. 6 is another planar view of an exemplary structure of the tube wall 22-1.
Fig. 7 shows another exemplary arrangement of the plurality of through-holes 24.
Fig. 8A shows an example of a shape of the through-hole 24 in the cross-sectional plane of the tube wall 22-1.
Fig. 8B shows another example of a shape of the through-hole 24 in the cross-sectional plane of the tube wall 22-1.
Fig. 9 shows an exemplary shape of the connecting tube 20.
Fig. 10 shows an example of the position of the optical axis of the laser light.
Fig. 11A is a drawing obtained by analyzing change in the intrusion amount of the gas under measurement into the connecting tube 20 in cases where the ratios between the length L of the open region 30 and the diameter D of the connecting tube 20 are changed.
Fig. 11B is a drawing obtained by analyzing change in the intrusion amount of the gas under measurement into the connecting tube 20 in cases where the ratios between the length L of the open region 30 and the diameter D of the connecting tube 20 are changed.
Fig. 11C is a drawing obtained by analyzing change in the intrusion amount of the gas under measurement into the connecting tube 20 in cases where the ratios between the length L of the open region 30 and the diameter D of the connecting tube 20 are changed.
Fig. 11D is a drawing obtained by analyzing change in the intrusion amount of the gas under measurement into the connecting tube 20 in cases where the ratios between the length L of the open region 30 and the diameter D of the connecting tube 20 are changed.
Fig. 12 shows an exemplary configuration of the analyzing apparatus 100.
Fig. 13 shows another exemplary configuration of the analyzing apparatus 100.
Fig. 14 shows another exemplary configuration of the analyzing apparatus 100.
Fig. 15 shows an exemplary configuration of an exhaust gas processing system 200 according to an embodiment of the present invention.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

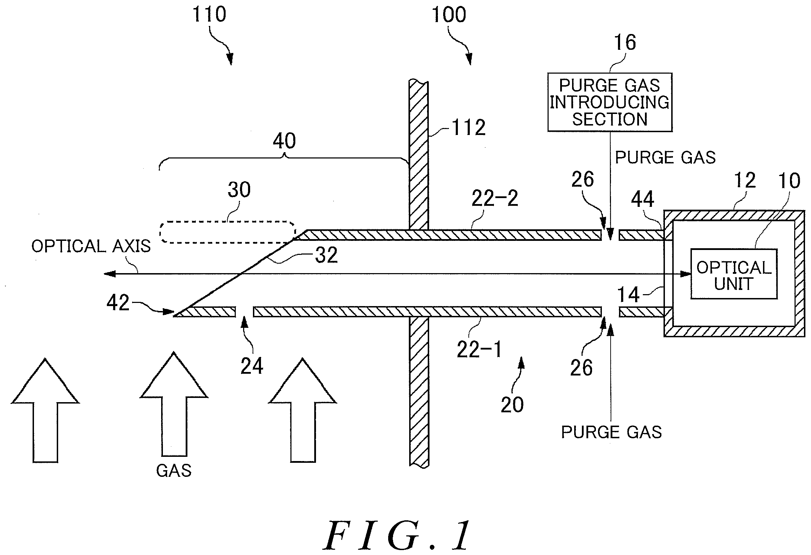

Fig. 1 is a schematic view of an exemplary analyzing apparatus 100 according to an embodiment of the present invention. The analyzing apparatus 100 irradiates a flue 110 with laser light and analyzes the concentration of a component contained in a gas under measurement passing through the flue 110. The component contained in the gas under measurement may be a prescribed gas component or may be a solid component such as dust. The analyzing apparatus 100 radiates laser light with a wavelength having a larger absorption amount for a component that is an analysis target, and detects the concentration of this component based on the amount of this laser light that is absorbed. Furthermore, the analyzing apparatus 100 may be an apparatus that, when the concentration of the prescribed component is zero or less than or equal to a prescribed value, judges that the gas under measurement is not flowing.

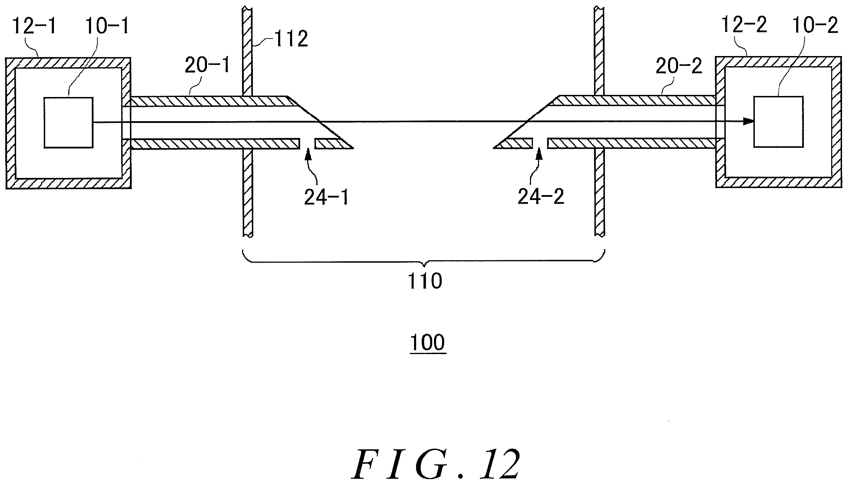

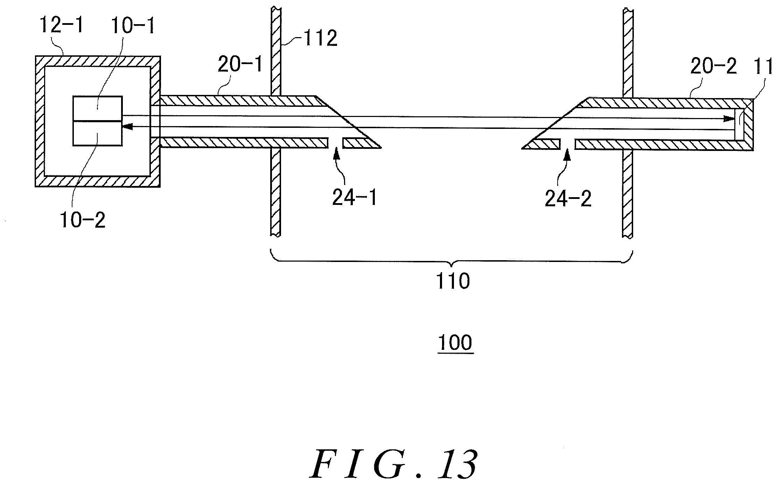

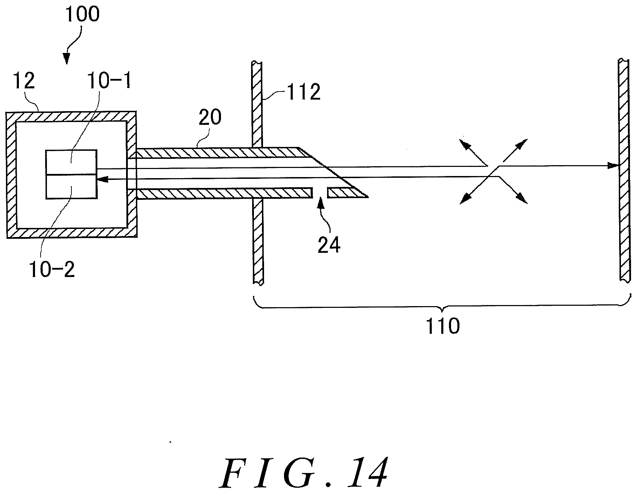

The analyzing apparatus 100 includes an optical unit 10, a case 12, a purge gas introducing section 16, and a connecting tube 20. The configuration shown in Fig. 1 may be a portion of the analyzing apparatus 100. The analyzing apparatus 100 includes one or more optical units 10 that provide an emission function and a light reception function for laser light. In the analyzing apparatus 100, the emission function and the light reception function for the laser light may be provided by two optical units 10. The two optical units 10 may be provided at separate locations, as shown in Fig. 12, or may be provided adjacently, as shown in Fig. 13 or 14. The optical unit 10 shown in Fig. 1 has at least one of the emission function and the light reception function for the laser light. For example, in a case where the optical unit 10 shown in Fig. 1 has the laser light emission function, the analyzing apparatus 100 further includes a configuration for receiving the laser light in addition to the configuration shown in Fig. 1. The configuration for receiving the laser light may be the same as the optical unit 10, the case 12, the purge gas introducing section 16, and the connecting tube 20 shown in Fig. 1.

The case 12 houses the optical unit 10. A window 14 through which the laser light transparently passes is provided in a portion of a wall surface of the case 12. The optical unit 10 emits or receives the laser light via the window 14. The window 14 may have a function to collimate or focus the laser light.

The window 14 shields the inside of the case 12 from the inside of the connecting tube 20. In this way, it is possible to protect the optical unit 10 provided inside the case 12 from the gas under measurement or the like. A processing apparatus for processing the measurement results of the optical unit 10, a control apparatus for controlling the optical unit 10, and the like may be provided inside the case 12.

The connecting tube 20 has an end portion 44 that is optically connected to the optical unit 10. Specifically, the laser light emitted by the optical unit 10 may be incident to one end of the connecting tube 20, and the laser light passed through the connecting tube 20 may be output from the end portion 44 of the connecting tube 20 to be received by the optical unit 10.

An end portion 42 of the connecting tube 20 opposite the optical unit 10 is inserted into the flue 110. The connecting tube 20 may be provided penetrating through a wall 112 of the flue 110. The wall 112 may have a flange or the like to which the connecting tube 20 is secured, in a region thereof through which the connecting tube 20 passes. The flange may have an optical axis adjusting section that adjusts the angle of the connecting tube 20 relative to the wall 112. In this way, it is possible to adjust the optical axis of the optical unit 10 relative to the flue 110.

In the present example, a prescribed range from the end portion 42 inserted into the flue 110 in the connecting tube 20 is referred to as an insertion end region 40. The insertion end region 40 may be less than or equal to half of the total length of the connecting tube 20, or may be less than or equal to 1/4 of the total length of the connecting tube 20. Furthermore, the insertion end region 40 may refer to a region inserted into the flue 110.

The connecting tube 20 passes the laser light between the ends thereof. Specifically, the laser light is propagated between the optical unit 10 and the inside of the flue 110. The connecting tube 20 has a tube shape, such as a circular tube or a square tube.

The analyzing apparatus 100 analyzes the gas concentration based on the amount of laser light absorbed. The amount of laser light absorbed depends on the length of the optical path by which the laser light passes through the gas under measurement. Therefore, in order to accurately analyze the gas concentration, the length of the optical path preferably does not fluctuate. On the other hand, the end portion 42 of the connecting tube 20 is inserted into the flue 110. Therefore, when the gas under measurement from the end portion 42 intrudes into the connecting tube 20, the length of the optical path by which the laser light passes through the gas under measurement fluctuates. Furthermore, since the amount of gas intruding into the connecting tube 20 fluctuates according to the flow rate or flow speed of the gas flowing through the flue 110, the optical path length described above also fluctuates. By including the insertion end region 40 of the connecting tube 20 with a prescribed structure, the analyzing apparatus 100 in the present example restricts the intrusion of the gas under measurement into the connecting tube 20.

The connecting tube 20 includes a through-hole 24 in the tube wall thereof in the insertion end region 40. The connecting tube 20 includes a tube wall 22-1 on the upstream side and a tube wall 22-2 on the downstream side relative to the flow of the gas under measurement. The tube wall 22-1 may refer to the half of the tube wall of the connecting tube 20 that is on the upstream side of the gas flow, and the tube wall 22-2 may refer to the half of the tube wall of the connecting tube 20 that is on the downstream side of the gas flow. The through-hole 24 is provided in the tube wall 22-1 on the upstream side relative to the gas flow. The through-hole 24 may be formed in a region on the most upstream side relative to the gas flow, among the regions of the tube wall 22-1. In other words, the through-hole 24 may be provided in a lowest portion of the tube wall 22-1.

The connecting tube 20 includes an open region 30 arranged opposite the through-hole 24. The open region 30 is formed in the tube wall 22-2 on the downstream side. The open region 30 refers to a region opposite the tube wall 22-1 on the upstream side, which is a region where the tube wall 22-2 is not provided on the downstream side. The open region 30 has a greater area than the through-hole 24. The area of the open region 30 refers to the area in the surface along the tube wall 22-2. In other words, if it were assumed that the tube wall 22-2 were extended, the area of the open region 30 would refer to the area of the open region 30 in the tube wall 22-2. The open region 30 may be a notch formed in the tube wall 22-2.

In the present example, the tube wall of the connecting tube 20 has a diagonal notch 32 formed therein from the tube wall 22-1 at the end portion 42 of the connecting tube 20 to the tube wall 22-2 on the end portion 44 side. In other words, the notch 32 is formed such that the tube wall 22-1 on the upstream side is longer than the tube wall 22-2 on the downstream side. The notch 32 is formed farther from the end portion 42 toward the end portion 44 side than at least a position opposite the through-hole 24.

With such a configuration, the tube wall 22-1 of the connecting tube 20 on the upstream side of the gas flow protrudes. Therefore, the flow of the gas under measurement is impeded by the tube wall 22-1, and the gas under measurement passes through while avoiding the connecting tube 20. In this way, the gas under measurement can be prevented from directly flowing into the connecting tube 20.

However, it should be noted that the gas flow impeded by the tube wall 22-1 is separated from another gas flow passing through the flue 110. The gas flow that has been separated from the other gas flow has its flow speed reduced on the tube wall 22-2 side, and there are cases where this gas flow intrudes into the connecting tube 20 from near the open region 30 without passing to the downstream side of the flue 110. In contrast to this, by providing the through-hole 24 in the tube wall 22-1 on the upstream side, the gas flow that has passed through the through-hole 24 passes through the open region 30 and flows to the downstream side of the flue 110. Due to the gas flow that has passed through the through-hole 24, the gas flow that has been impeded by the tube wall 22-1 can be prevented from circulating within the connecting tube 20 from near the open region 30.

With such a configuration, it is possible to reduce the amount of gas under measurement that intrudes into the connecting tube 20. Accordingly, even when the flow rate of the gas flowing through the flue 110 fluctuates, the effect on the optical path length can be reduced and the variation in the optical path length by which the laser light passes through the gas under measurement can be reduced. Therefore, it is possible to accurately analyze the gas under measurement.

Furthermore, the analyzing apparatus 100 may further include a purge gas introducing section 16 that introduces a purge gas into the connecting tube 20. In this case, the connecting tube 20 includes an introduction hole 26 that introduces the purge gas into the connecting tube 20, on the optical unit 10 side of the through-hole 24. The introduction hole 26 is provided in a region that is not inserted into the flue 110. The purge gas may be air, nitrogen, or the like in which the dust density is less than in the gas under measurement.

The purge gas introduced into the connecting tube 20 is expelled into the flue 110 from the end portion 42. If enough purge gas to fill the inside of the connecting tube 20 is continuously supplied from the introduction hole 26, the gas under measurement does not intrude into the connecting tube 20. However, in order to continuously supply a sufficient amount of the purge gas, the equipment size of the compressor or the like increases and the equipment cost rises. Furthermore, since a large amount of the purge gas must be expended, the cost of the gas itself also rises.

In contrast to this, with the analyzing apparatus 100 in the present example, by providing the through-hole 24 and the open region 30, it is possible to prevent the gas under measurement from intruding into the connecting tube 20. Therefore, even when the flow rate of the purge gas becomes low, it is possible to prevent the gas under measurement from intruding into the connecting tube 20. Accordingly, the analyzing apparatus 100 can realize high accuracy for the analysis and low cost.

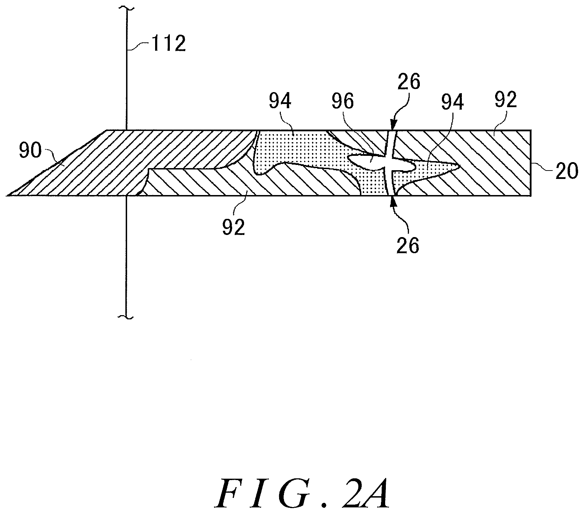

Fig. 2A shows analytical results of a concentration distribution of the gas under measurement intruding into the connecting tube 20 in a case where the through-hole 24 is not included. In the present example, the flow speed of the gas under measurement flowing through the flue 110 is set to 15 m/s, the flow rate of the purge gas is set to 15 L/min, and the diameter of the connecting tube 20 is set to 50 mm. Furthermore, the ratio between the length L of the notch 32 in the length direction of the connecting tube 20 and the diameter D of the connecting tube 20 is set such that LID = 1.73. In the present example, the length direction of the connecting tube 20 refers to the direction of the optical axis of the laser light.

In Fig. 2A, the region 90, the region 92, the region 94, and the region 96 are shown in order from the region having the highest concentration of gas under measurement. The region 96 is a region almost entirely filled with the purge gas. Fig. 2A shows the analytical results schematically. The concentration of the gas under measurement does not change in a stepped manner among four stages, but actually changes smoothly.

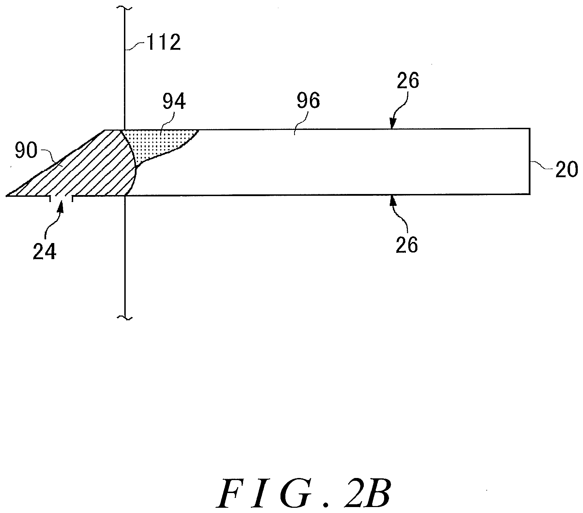

Fig. 2B shows analytical results of a concentration distribution of the gas under measurement intruding into the connecting tube 20 in a case where the through-hole 24 is included. In the present example, the diameter of the through-hole 24 is set to 20 mm. The through-hole 24 in the present example is circular. Furthermore, the through-hole 24 is provided at a position 60 mm from the inner surface of the wall 112 of the flue 110. The other conditions are the same as in the case shown in Fig. 2A.

In the example of Fig. 2A, the region 90 having a high concentration is formed to the inside of the connecting tube 20. In contrast, in the example of Fig. 2B, the region 90 having a high concentration barely intrudes to the inside of the connecting tube 20. Furthermore, in the example of Fig. 2A, the gas under measurement is distributed across the entirety of the connecting tube 20. In contrast, in the example of Fig. 2B, the gas under measurement is distributed only near the end portion on the flue 110 side of the connecting tube 20, and the gas under measurement does not intrude to a deep position in the connecting tube 20 on the optical unit 10 side.

In this way, by providing the through-hole 24, it is possible to prevent the gas under measurement from intruding into the connecting tube 20. When the flow speed of the gas under measurement is in a range from 5 m/s to 15 m/s, even when the ratio of the purge gas flow rate (m/s) divided by the gas under measurement flow speed (L/min) drops below 1, the gas under measurement does not intrude into the connecting tube 20. In a case where the through-hole 24 is not provided, if the purge gas does not flow until the above ratio reaches approximately 10, the gas under measurement intrudes into the connecting tube 20. Therefore, by providing the through-hole 24, the flow rate of the purge gas can be reduced to approximately 1/10.

Even when the diameter of the through-hole 24 is 15 mm, the gas under measurement does not intrude into the connecting tube 20. Therefore, the diameter of the through-hole 24 may be greater than or equal to 10 mm and less than or equal to 25 mm. The lower limit on the diameter of the through-hole 24 may be 15 mm. The upper limit on the diameter of the through-hole 24 may be 20 mm. Furthermore, the lower limit on the diameter of the through-hole 24 may be greater than or equal to 1/10, greater than or equal to 1/5, or greater than or equal to 3/10 of the diameter of the connecting tube 20. The upper limit on the diameter of the through-hole 24 may be less than or equal to 1/2 or less than or equal to 2/5 of the diameter of the connecting tube 20. In a case where a plurality of the through-holes 24 are provided, the diameter of the largest through-hole 24-1 preferably satisfies the conditions described above.

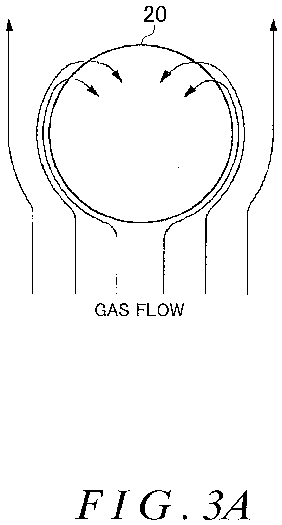

Fig. 3A schematically shows the gas flow around the connecting tube 20 in a case where the through-hole 24 is not included. As described above, the gas flow that has collided with the bottom surface of the connecting tube 20 flows along the connecting tube 20. The gas flow flowing along the connecting tube 20 becomes a flow that has been separated from the other gas flow, and the force of the flow in the downstream direction of the flue 110 becomes weaker. As a result, the gas under measurement more easily intrudes into the connecting tube 20 from the region where the notch 32 is formed in the connecting tube 20.

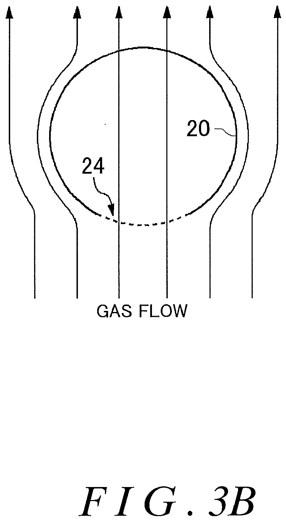

Fig. 3B schematically shows the gas flow around the connecting tube 20 in a case where the through-hole 24 is included. As described above, due to the gas flow that has passed through the through-hole 24, the gas flow flowing along the perimeter of the connecting tube 20 can be prevented from intruding into the connecting tube 20. By making the open region 30 shown in Fig. 1 sufficiently wide, the gas under measurement that has passed through the through-hole 24 can be prevented from intruding into the connecting tube 20.

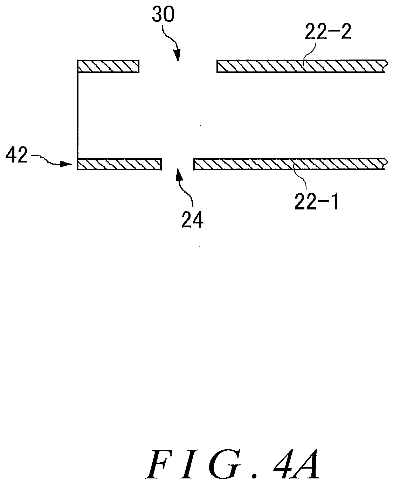

Fig. 4A shows an exemplary structure near the end portion 42 which does not fall under the scope of the claims . The connecting tube 20 in the present example does not include the notch 32, and the tube wall 22-1 and the tube wall 22-2 extend to the end portion 42 in parallel. The through-hole 24 is formed in the tube wall 22-1. A clipped portion that has a greater area than the through-hole 24 and includes a region opposite the through-hole 24 is formed in the tube wall 22-2. The clipped portion is provided penetrating through the tube wall 22-2. The clipped portion of the tube wall 22-2 functions as the open region 30. With such a structure as well, it is possible to prevent the gas under measurement from intruding into the connecting tube 20. The diameter of the clipped portion of the tube wall 22-2 may be greater than or equal to two times or greater than or equal to three times the diameter of the through-hole 24.

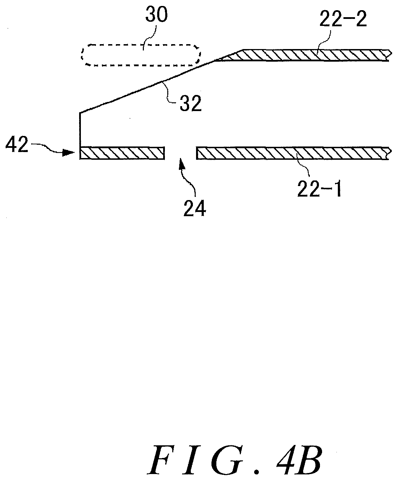

Fig. 4B shows an exemplary structure near the end portion 42. The connecting tube 20 in this example has a notch 32 formed from an intermediate origin point in the height direction of the end portion 42 toward the tube wall 22-2. In other words, the connecting tube 20 in the present example has an end portion 42 that is not blunt. With such a structure as well, it is possible to prevent the gas under measurement from intruding into the connecting tube 20.

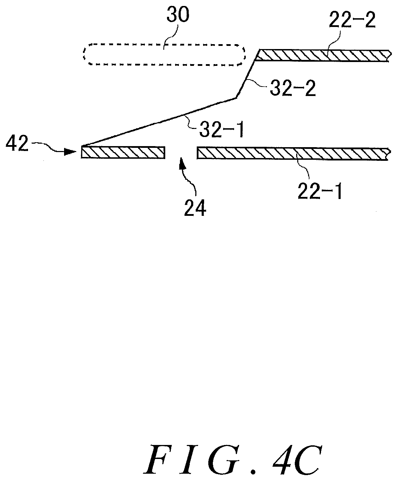

Fig. 4C shows an exemplary structure near the end portion 42. The connecting tube 20 in the present example includes a first notch 32-1 and a second notch 32-2 that have different angles. The first notch 32-1 is formed from the end portion 42, and the second notch 32-2 is formed from the end portion of the first notch 32-1. The second notch 32-2 may have a greater angle than the first notch 32-1 relative to the tube wall 22-2. With such a structure as well, it is possible to prevent the gas under measurement from intruding into the connecting tube 20.

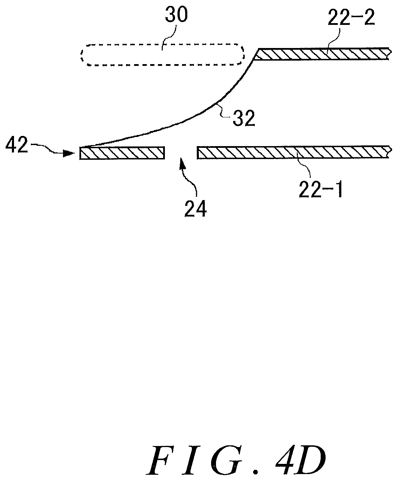

Fig. 4D shows an exemplary structure near the end portion 42. The connecting tube 20 in the present example includes a curved notch 32. The notch 32 may have a convex curved shape protruding to the tube wall 22-1 side where the through-hole 24 is formed. Furthermore, the notch 32 may have a convex curved shape protruding to the tube wall 22-2 side.

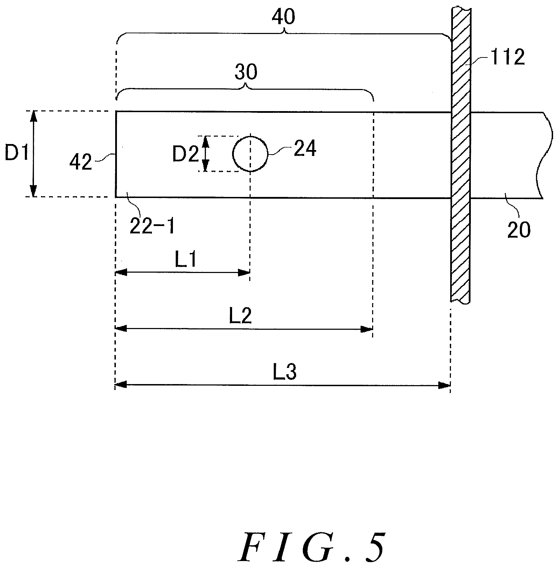

Fig. 5 is a planar view of an exemplary structure of the tube wall 22-1. Fig. 5 is a view of the connecting tube 20 as seen from the upstream side of the gas flow. The through-hole 24 is formed in the tube wall 22-1. The through-hole 24 may be provided in the center of the range formed by the open region 30 in the length direction of the connecting tube 20. In the present example, the open region 30 is provided in a range of a length L2 from the end portion 42. The through-hole 24 is provided at a position at a distance L1 from the end portion 42. Here, L1 may be half of L2.

Alternatively, L1 may be greater than half of L2. For example, in a case where the length of the insertion end region 40 protruding into the flue 110 from the wall 112 of the flue 110 is L3, L1 may be half of L3. Alternatively, L1 may be greater than half of L3. However, it should be noted that L1 is less than L2. In a case where the diameter of the connecting tube 20 is D1 and the diameter of the through-hole 24 is D2, D2 may be greater than or equal to 1/10 of D1 and less than or equal to 1/2 of D1, as described above.

The shape of the opening of the through-hole 24 is not limited to a circle. The opening of the through-hole 24 can adopt a variety of shapes such as an elliptical shape, an ovular shape, and a polygonal shape. In a case where the shape of the opening of the through-hole 24 is not a circle, the diameter of the through-hole 24 refers to the maximum width of the opening of the through-hole 24.

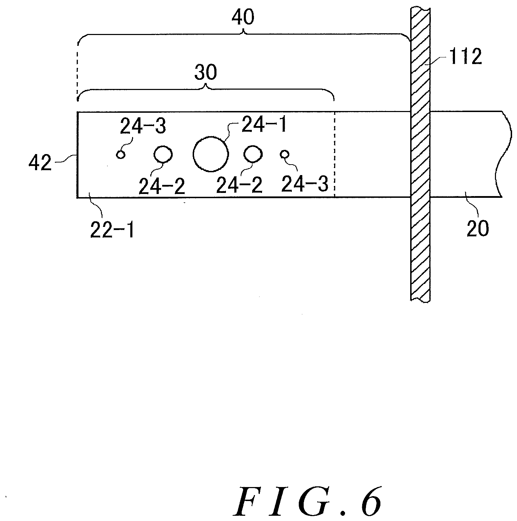

Fig. 6 is a planar view of another exemplary structure of the tube wall 22-1. A plurality of through-holes 24 are formed in the tube wall 22-1 in the present example. In the present example, the plurality of through-holes 24 are arranged along the length direction of the connecting tube 20. It should be noted that the plurality of through-holes 24 are all formed in a region opposite the open region 30. At least one through-hole 24 is provided on the optical unit 10 side of the center of the range formed by the open region 30.

In the present example, the plurality of through-holes 24 are arranged to be symmetrical with the center of the range formed by the open region 30 as a reference. The through-hole 24-1 having the largest diameter may be formed in the center of the range formed by the open region 30. In accordance with the distance from the center of the range formed by the open region 30 becoming greater, the diameters of the through-holes 24 may become smaller. In the example shown in Fig. 6, the diameters of the through-hole 24-2 and the through-hole 24-3 become smaller in accordance with the distance from the through-hole 24-1 becoming greater.

The diameter of the through-hole 24-2 may be less than or equal to half of the diameter of the through-hole 24-1. The diameter of the through-hole 24-3 may be less than or equal to half of the diameter of the through-hole 24-2. Furthermore, the diameter of each through-hole 24 may be larger in accordance with being closer to the end portion 42.

In this way, by providing the plurality of through-holes 24, it is possible to efficiently restrict the intrusion of the gas under measurement into the connecting tube 20. Furthermore, since the diameter of the through-hole 24 closest to the optical unit 10 is relatively small, it is possible to restrict the intrusion of the gas under measurement that has passed through the through-hole 24 into the connecting tube 20.

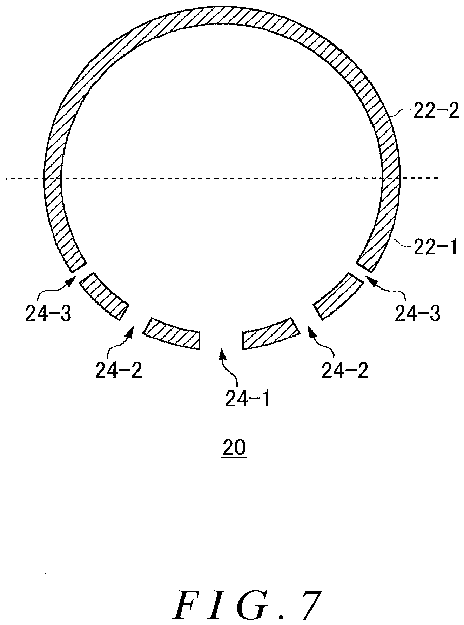

Fig. 7 shows another exemplary arrangement of the plurality of through-holes 24. Fig. 7 is a cross-sectional view of the connecting tube 20 as seen from the optical axis direction. As described above, concerning the side wall of the connecting tube 20, the half to be provided on the upstream side of the gas flow is referred to as the tube wall 22-1 and the half to be provided on the downstream side of the gas flow is referred to as the tube wall 22-2.

In the present example, the plurality of through-holes 24 are provided in the tube wall 22-1 along the circumferential direction of the connecting tube 20. The circumferential direction of the connecting tube 20 refers to a direction along a cross-sectional shape in a case where the connecting tube 20 is cleaved by a plane perpendicular to the length direction of the connecting tube 20.

In the present example as well, the plurality of through-holes 24 are all formed in the region opposite the open region 30. For example, the plurality of through-holes 24 are arranged along the circumferential direction of the connecting tube 20 in the center of the range formed by the open region 30.

Among the plurality of through-holes 24, the through-hole 24-1 arranged on the most upstream side of the gas flow may have the largest diameter. In other words, the through-hole 24-1 arranged farthest on the bottom portion side of the tube wall 22-1 may have the largest diameter. The plurality of through-holes 24 may be arranged symmetrically with the through-hole 24-1 serving as the center. When the distance from the through-hole 24-1 in the circumferential direction of the connecting tube 20 is larger, the diameters of the through-holes 24 may be smaller.

Furthermore, the arrangements of the plurality of through-holes 24 shown in Figs. 6 and 7 may be combined. In other words, the plurality of through-holes 24 may be arranged in both the length direction and the circumferential direction of the connecting tube 20.

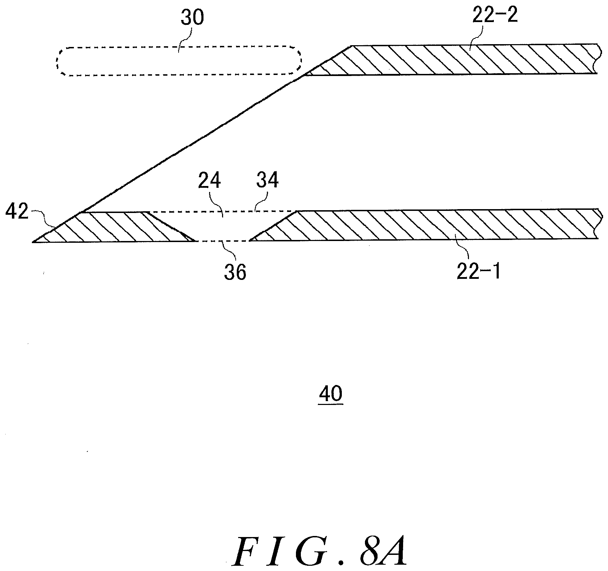

Fig. 8A shows an example of a shape of the through-hole 24 in the cross-sectional plane of the tube wall 22-1. Fig. 8A shows a cross section of the connecting tube 20 in the insertion end region 40. The shape of the through-hole 24 in the present example may be adopted in any one of the examples described in Figs. 1 to 7.

The through-hole 24 has a tapered shape in which an opening 34 in the inner side of the connecting tube 20 has a larger area than an opening 36 in an outer side of the connecting tube 20. The outer side of the connecting tube 20 refers to the side facing the gas flow, and the inner side of the connecting tube 20 refers to the side through which the laser light passes. Therefore, it becomes easy for moisture or the like attached to the inside of the connecting tube 20 to be ejected to the outside of the connecting tube 20.

The opening 34 in the inner side of the connecting tube 20 is preferably provided in the region opposite the open region 30. Furthermore, the tube wall 22-1 of the connecting tube 20 may have an incline, such that the moisture or the like to flow in the direction of the through-hole 24. The incline of the tube wall 22-1 may be more gentle than that of the taper of the through-hole 24. The incline of the tube wall 22-1 may be formed to a position on the end portion 44 side of the insertion end region 40.

Furthermore, in the through-hole 24, the taper angle of the side wall on the end portion 44 side may be less than the taper angle of the side wall on the end portion 42 side. Here, the taper angle refers to an angle relative to a plane orthogonal to the tube wall 22-1. In this way, it becomes more difficult for the gas under measurement to flow to the end portion 44 side, and it is possible to restrict the intrusion of the gas under measurement into the connecting tube 20.

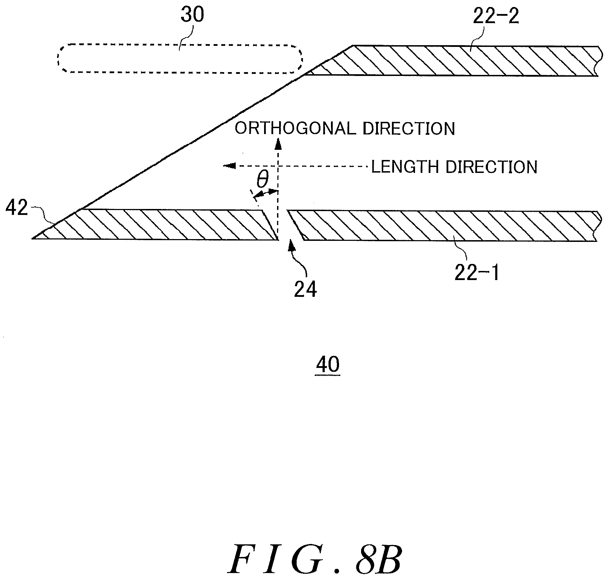

Fig. 8B shows another example of a shape of the through-hole 24 in the cross section of the tube wall 22-1. The shape of the through-hole 24 in the present example may be adopted in any one of the examples described in Figs. 1 to 7. The through-hole 24 in the present example has a penetration direction, which is a direction in which the through-hole 24 penetrates through the tube wall 22-1, with a slope θ relative to a direction orthogonal to the length direction of the connecting tube 20. The through-hole 24 has a constant diameter in the penetration direction. The penetration direction of the through-hole 24 may have a slope on the end portion 42 side relative to the orthogonal direction described above. With this structure as well, it becomes more difficult for the gas under measurement to flow to the end portion 44 side, and it is possible to restrict the intrusion of the gas under measurement into the connecting tube 20.

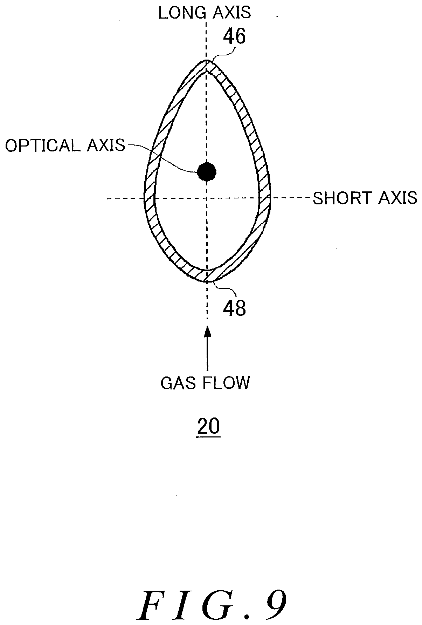

Fig. 9 shows an exemplary shape of the connecting tube 20. The shape of the connecting tube 20 in the present example may be adopted in any one of the examples described in Figs. 1 to 8B. The connecting tube 20 in the present example has a cross-sectional shape that is streamlined as seen from the direction of the optical axis of the laser light. In this cross section of the connecting tube 20, the axis in a direction having the largest width is referred to as the long axis. Furthermore, the axis in a direction orthogonal to the long axis at a position of the largest width is referred to as the short axis.

The connecting tube 20 includes two end portions 46 and 48 that have different curvatures on the long axis. In the present example, the curvature of the end portion 48 is greater than the curvature of the end portion 46. In other words, the end portion 48 has a curved shape that is more gentle than that of the end portion 46. The short axis is provided closer to the end portion 48 than the center of the connecting tube 20. The connecting tube 20 is arranged such that the end portion 48 is on the upstream side of the gas flow.

The optical axis may be arranged at the center of the connecting tube 20 on the long axis. Alternatively, the optical axis may be arranged closer to the end portion 48 than the center of the connecting tube 20 on the long axis. The optical axis may be provided at an intersection point between the long axis and the short axis, or may be provided closer to the end portion 48 than the short axis.

With the present example, the gas flow that has been impeded by the connecting tube 20 flows more easily toward the downstream side of the flue 110. Therefore, it is possible to restrict the intrusion of the gas under measurement into the connecting tube 20.

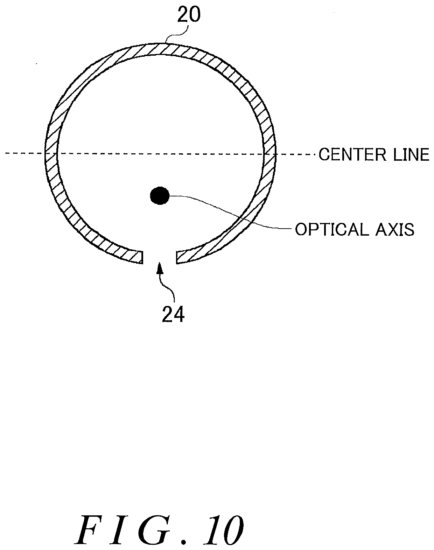

Fig. 10 shows an example of the position of the optical axis of the laser light. In the present example, the connecting tube 20 has a circular cross-sectional shape as seen from the optical axis, but the cross-sectional shape of the connecting tube 20 is not limited to being circular. The cross-sectional shape of the connecting tube 20 may be streamlined as shown in Fig. 9, or may be an elliptical shape, an ovular shape, a polygonal shape, or the like.

In the present example, the optical axis of the laser light is arranged on the through-hole 24 side of the center in the height direction of the connecting tube 20. The height direction of the connecting tube 20 refers to the same direction as the direction of the gas flow in the flue 110. Furthermore, the height direction of the connecting tube 20 can be defined by the direction of a straight line passing through the through-hole 24 and the center of this cross section of the connecting tube 20.

As shown in Fig. 2B, it is relatively difficult for the gas under measurement to intrude into the lower side of the connecting tube 20. Therefore, by arranging the optical axis of the laser light on the lower side of the connecting tube 20, the laser light can pass through a region into which the gas under measurement has difficulty intruding. Therefore, it is possible to reduce the variation in the optical path of the laser light passing through the gas under measurement.

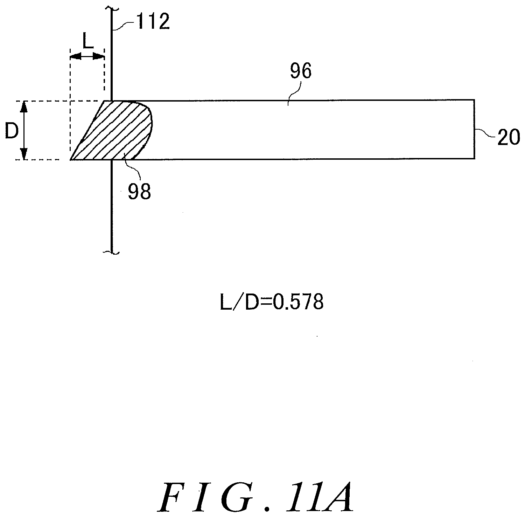

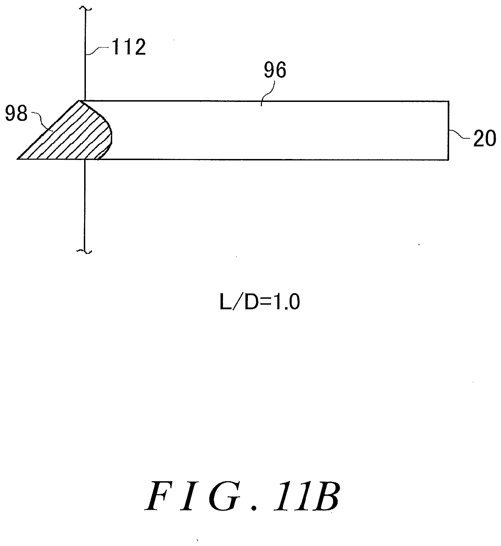

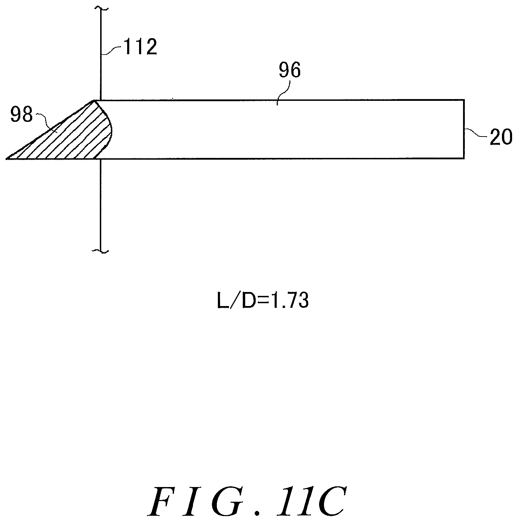

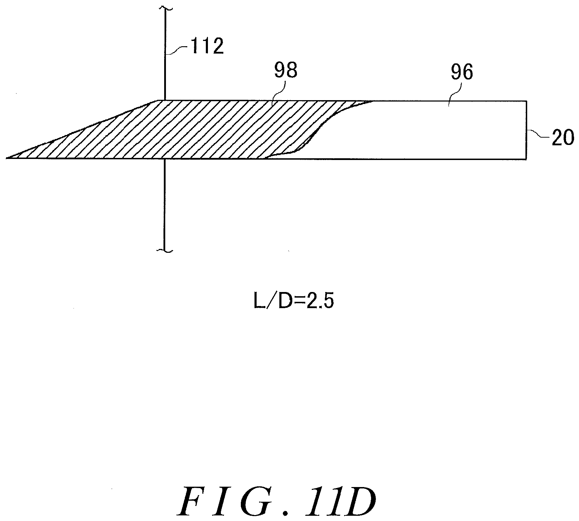

Figs. 11A, 11B, 11C, and 11D are drawings obtained by analyzing change in the intrusion amount of the gas under measurement into the connecting tube 20 in cases where the ratios between the length L of the open region 30 and the diameter D of the connecting tube 20 are changed. In each drawing, the region where the concentration of the gas under measurement that intrudes is greater than or equal to a prescribed concentration is the region 98. The conditions other than the LID ratio are the same as in Figs. 2A and 2B.

Fig. 11A shows a case where LID = 0.578, Fig. 11B shows a case where LID = 1.0, Fig. 11C shows a case where LID = 1.73, and Fig. 11D shows a case where L/D = 2.5. In the examples shown in Figs. 11A to 11C, the gas under measurement barely intrudes into the connecting tube 20. On the other hand, in the example shown in Fig. 11D, a relatively large amount of the gas under measurement intrudes into the connecting tube 20.

The ratio LID between the length L of the open region 30 and the diameter D of the connecting tube 20 may be greater than or equal to 0.5 and less than or equal to 2.0. The ratio LID may be greater than or equal to 0.578 and less than or equal to 1.73. With such a shape, it is possible to restrict the intrusion of the gas under measurement into the connecting tube 20.

Fig. 12 shows an exemplary configuration of the analyzing apparatus 100. The analyzing apparatus 100 in the present example includes two sets of the configuration shown in Fig. 1. It should be noted that Fig. 12 shows two sets that each include an optical unit 10, a case 12, a connecting tube 20, and a through-hole 24, but other configurational components such as the purge gas introducing section 16 are omitted from the drawing. The analyzing apparatus 100 may include each configurational component shown in Figs. 1 to 11D.

The first optical unit 10-1 is housed in the first case 12-1 and irradiates the first connecting tube 20-1 with laser light. The laser light that has passed through the first connecting tube 20-1 passes through the flue 110. The laser light is absorbed by the gas under measurement, thereby reducing the strength of a prescribed wavelength component.

The laser light that has passed through the flue 110 is incident to the second connecting tube 20-2. The light incident to the second connecting tube 20-2 passes through the second connecting tube 20-2 and reaches the second optical unit 10-2 housed in the second case 12-2. The second optical unit 10-2 receives the laser light that has passed through the second connecting tube 20-2, and generates a signal corresponding to the strength of the prescribed wavelength component in the laser light. In this way, it is possible to measure the concentration of the prescribed component contained in the gas under measurement.

A first through-hole 24-1 is formed in the first connecting tube 20-1 in the present example, and a second through-hole 24-2 is formed in the second connecting tube 20-2. The open region 30 shown in Fig. 1 and the like is provided in each region opposite a respective through-hole 24. With such a configuration, it is possible to restrict the intrusion of the gas under measurement into the first connecting tube 20-1 and the second connecting tube 20-2. Accordingly, it is possible to accurately measure the concentration of the prescribed component contained in the gas under measurement. Furthermore, even when the flow rate of the purge gas is reduced, it is possible to accurately measure the concentration of the prescribed component contained in the gas under measurement.

Fig. 13 shows another exemplary configuration of the analyzing apparatus 100. The analyzing apparatus 100 in the present example includes the first case 12-1, the first optical unit 10-1, the second optical unit 10-2, the first connecting tube 20-1, the second connecting tube 20-2, the first through-hole 24-1, the second through-hole 24-2, and a reflecting portion 11. In the same manner as in Fig. 12, display of configurational components such as the purge gas introducing section 16 is omitted from Fig. 13. The analyzing apparatus 100 may include each configurational component shown in Figs. 1 to 11D. The first connecting tube 20-1 may be provided in common for the first optical unit 10-1 and the second optical unit 10-2. The first optical unit 10-1 and the second optical unit 10-2 may be provided adjacently.

The first case 12-1 houses the first optical unit 10-1 and the second optical unit 10-2. The first optical unit 10-1 emits laser light, and the second optical unit 10-2 receives the laser light.

The first optical unit 10-1 emits the laser light to the first connecting tube 20-1. The laser light passes through the first connecting tube 20-1 to be incident in the flue 110. The laser light that has passed through the flue 110 is incident to the second connecting tube 20-2. The reflecting portion 11 that reflects the laser light is provided at the end portion of the second connecting tube 20-2 on the side opposite the flue 110.

The laser light reflected by the reflecting portion 11 passes through the second connecting tube 20-2, the flue 110, and the first connecting tube 20-1, and is received by the second optical unit 10-2. In this way, it is possible to measure the concentration of the prescribed component contained in the gas under measurement. Since the laser light makes a round trip through the flue 110, the absorption amount is always twice as much as in the example shown in Fig. 12.

The through-hole 24-1 is formed in the first connecting tube 20-1. The structure of the second connecting tube 20-2 may be same as the structure of the first connecting tube 20-1, aside from the reflecting portion 11 being provided instead of the case 12-1. A purge gas introducing section 16 may be provided for both the first connecting tube 20-1 and the second connecting tube 20-2. With this configuration as well, it is possible to restrict the intrusion of the gas under measurement into the first connecting tube 20-1 and the second connecting tube 20-2.

Fig. 14 shows another exemplary configuration of the analyzing apparatus 100. The analyzing apparatus 100 in the present example includes the case 12, the first optical unit 10-1, the second optical unit 10-2, and the connecting tube 20. In Fig. 14 as well, the display of configurational components such as the purge gas introducing section 16 is omitted. The analyzing apparatus 100 may include each configurational component shown in Figs. 1 to 11D. The connecting tube 20 is provided in common for the first optical unit 10-1 and the second optical unit 10-2. The first optical unit 10-1 and the second optical unit 10-2 may be provided adjacently.

The first case 12-1 houses the first optical unit 10-1 and the second optical unit 10-2. The first optical unit 10-1 emits the laser light, and the second optical unit 10-2 receives the laser light.

The first optical unit 10-1 emits the laser light to the connecting tube 20. The laser light passes through the connecting tube 20 to be incident to the flue 110. The laser light is diffused and reflected inside the flue 110, and a portion of this laser light returns to the connecting tube 20. In other words, a portion of the laser light is returned to the connecting tube 20 by reflection or the like after having passed through a portion of the flue 110. The second optical unit 10-2 receives the laser light that has returned from inside the flue 110.

The attenuation amount of the prescribed wavelength component in the laser light in a case where there is no light absorption in the flue 110 is preferably measured in advance. By comparing this attenuation amount to the attenuation amount of the laser light when measuring the gas under measurement, it is possible to measure the concentration of the prescribed component contained in the gas under measurement.

The through-hole 24 is formed in the connecting tube 20. With this configuration as well, it is possible to restrict the intrusion of the gas under measurement into the first connecting tube 20-1 and the second connecting tube 20-2. In the present example, the connecting tube 20 may be inserted diagonally into the flue 110. Even when the connecting tube 20 is inserted diagonally, it is possible to measure the laser light diffused inside the flue 110. As an example, the connecting tube 20 may be provided such that the position of the end portion 42 inside the flue 110 of the connecting tube 20 is farther on the downstream side of the gas flow than the end portion 44 on the optical unit 10 side. In this way, since the opening of the connecting tube 20 is oriented toward the downstream side of the gas flow, it is possible to restrict the direct intrusion of the gas flow into the connecting tube 20.

In each analyzing apparatus 100 described in Figs. 1 to 14, the purge gas introducing section 16 may increase the flow rate of the purge gas for every predetermined interval. For example, the purge gas introducing section 16 may cause the purge gas to flow periodically with a flow rate that is greater than or equal to two times the normal flow rate. The purge gas introducing section 16 may cause the purge gas to flow with a flow rate that is greater than or equal to five times the normal flow rate or may cause the purge gas to flow with a flow rate that is greater than or equal to ten times the normal flow rate. The interval during which the purge gas is made to flow with an increased flow rate may be shorter than the normal interval during which the flow rate of the purge gas is not increased. For example, the interval during which the purge gas is made to flow with an increased flow rate may be less than or equal to 1 second or less than or equal to 10 seconds. By temporarily increasing the flow rate of the purge gas, it is possible to efficiently remove moisture, dust, and the like inside the connecting tube 20.

In particular, by providing the open region 30, it becomes easier for dust and the like to attach to the tube wall 22-1 opposite the open region 30. Furthermore, by providing the through-hole 24, it is possible to reduce the normal flow rate of the purge gas, but when the purge gas flow rate is reduced, it becomes easier for dust or the like to attach to the tube wall 22-1. To deal with this, by periodically increasing the flow rate of the purge gas, it is possible to remove the dust or the like attached to the tube wall 22-1.

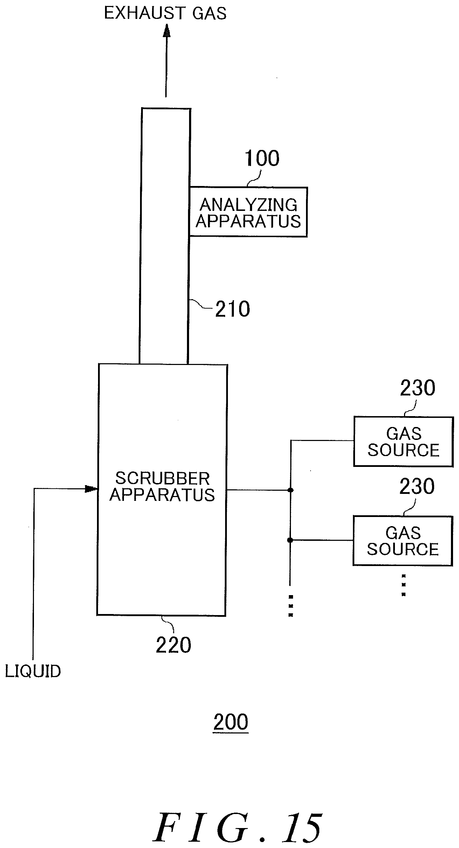

Fig. 15 shows an exemplary configuration of an exhaust gas processing system 200 according to an embodiment of the present invention. The exhaust gas processing system 200 includes the analyzing apparatus 100, a scrubber apparatus 220, and a flue 210, and processes exhaust gas that is expelled by one or more gas sources 230. The present example describes an exhaust gas processing system 200 provided in a ship, but the exhaust gas processing system 200 can be used in other ways.

Each gas source 230 is a main drive source for an engine of a ship, an auxiliary drive source, an electric power source for equipment in the ship, or the like, generates mechanical drive force, electric power, or the like, and also generates exhaust gas including harmful substances such as sulfur oxide.

The scrubber apparatus 220 removes the harmful substances contained in the exhaust gas of each gas source 230. The scrubber apparatus 220 may spray a liquid into the exhaust gas to absorb the harmful substances into the liquid. In a case where the exhaust gas processing system 200 is used in a ship, sea water or the like around the ship or water prepared in advance may be used as this liquid. Furthermore, the exhaust gas processing system 200 may cause the liquid used in the scrubber apparatus 220 to be in a reusable state by using chemicals or the like, and may reuse this liquid in the scrubber apparatus 220.

The exhaust gas processing system 200 may further include a dust removal apparatus that removes dust contained in the exhaust gas before the exhaust gas is introduced to the scrubber apparatus 220. The exhaust gas processing system 200 may be further provided with a thermoelectric conversion device that converts heat of the exhaust gas into electricity before the exhaust gas is introduced to the scrubber apparatus 220.

The analyzing apparatus 100 may be the same as the analyzing apparatus 100 described in Figs. 1 to 14, except of the apparatus 100 described in figure 4A which does not fall under the scope of the claims. By using the analyzing apparatus 100, it is possible to accurately measure the concentration of the prescribed component contained in the exhaust gas, and to perform the measurement at a low cost.

While the embodiments of the present invention have been described, the technical scope of the invention is not limited to the above described embodiments. It is apparent to persons skilled in the art that various alterations and improvements encompassed by the scope of the claims can be added to the above-described embodiments. It is also apparent from the scope of the claims that the embodiments added with such alterations or improvements can be included in the technical scope of the invention.

### List of Reference Numerals

10: optical unit, 11: reflecting portion, 12: case, 14: window, 16: purge gas introducing section, 20: connecting tube, 22: tube wall, 24: through-hole, 26: introduction hole, 30: open region, 32: notch, 34, 36: opening, 40: insertion end region, 42, 44, 46, 48: end portion, 90, 92, 94, 96, 96: region, 100: analyzing apparatus, 110: flue, 112: wall, 200: exhaust gas processing system, 210: flue, 220: scrubber apparatus, 230: gas source

## Claims

1. An analyzing apparatus (100) that irradiates a flue (110) with laser light and analyzes a component contained in a gas that passes through the flue (110), comprising:
an optical unit (10) that has an emission function and a light receiving function; and
a connecting tube (20) that has one end optically connected to the optical unit (10) and another bevelled end (30) that is inserted into the flue (110) and passes the laser light,
wherein the bevelled end (30) of the connecting tube (20) is formed in the tube wall (22) such that the tube wall (22-1) on the upstream side of the gas flow is longer than the tube wall (22-2) on the downstream side;
and wherein
the connecting tube (20) includes:
a through-hole (24) provided in a tube wall (22) in an insertion end region on an opposite side of the optical unit (10), the inserted portion being within a range from the bevelled end (30) of the connecting tube (20) to less than or equal to half of a total length of the connecting tube (20);
**characterized in that**
the through-hole (24) is provided in the tube wall (22-1) in the bevelled end (30) on an upstream side relative to the gas flow.

2. The analyzing apparatus (100) according to Claim 1, wherein
the optical unit (10) includes a first optical unit having a function for emitting the laser light to the flue and a second optical unit having a function for receiving the laser light emitted from the first optical unit and passed through the flue (110), and
the connecting tube (20) is provided respectively for each of the first optical unit and the second optical unit.

3. The analyzing apparatus (100) according to Claim 1 or 2, wherein
the connecting tube (20) is provided with an introduction hole (26) introducing a purge gas into the connecting tube (20), farther on the optical unit side than the through-hole (24).

4. The analyzing apparatus (100) according to any one of Claims 1 to 3, wherein
a plurality of the through-holes (24) is provided along a length direction of the connecting tube (20) in the bevelled end (30).

5. The analyzing apparatus (100) according to Claim 4, wherein
at least one of the through-holes (24) is provided on the optical unit side of a center of a range formed by the bevelled end (30), in a length direction of the connecting tube (20).

6. The analyzing apparatus (100) according to any one of Claims 1 to 5, wherein
a plurality of the through-holes (24) is provided along a circumferential direction of the connecting tube (20).

7. The analyzing apparatus (100) according to any one of Claims 1 to 5, wherein
a diameter of the through-hole (24) is greater than or equal to 1/10 of a diameter of the connecting tube (20) and less than or equal to 1/2 of the diameter of the connecting tube (20).

8. The analyzing apparatus (100) according to any one of Claims 1 to 7, wherein
a penetration direction in which the through-hole (24) penetrates through the tube wall (22) has a slope on an insertion end side of the connecting tube (20) that is inserted into the flue (110), relative to a direction orthogonal to a length direction of the connecting tube (20).

9. The analyzing apparatus (100) according to Claim 3, further comprising:
a purge gas introducing section (16) configured to introduce the purge gas into the connecting tube (20) from the introduction hole (26), wherein
the purge gas introducing section (16) is configured to increase a flow rate of the purge gas in each predetermined interval.

10. The analyzing apparatus (100) according to any one of Claims 1 to 9, wherein
the connecting tube (20) has a cross-sectional shape that is streamlined as seen from a direction of an optical axis of the laser light.

11. The analyzing apparatus (100) according to any one of Claims 1 to 10, wherein
the through-hole (24) has a tapered shape with an opening on an inner side of the connecting tube (20) that is larger than an opening in an outer side of the connecting tube.

12. An exhaust gas processing apparatus that processes exhaust gas, comprising:
a flue (110) that passes the exhaust gas; and
an analyzing apparatus (100) according to claim 1.

## Patentansprüche

1. Analysevorrichtung (100), die einen Abgaskanal (110) mit Laserlicht bestrahlt und eine Komponente analysiert, die in einem Gas enthalten ist, das durch den Abgaskanal (110) strömt, umfassend
eine optische Einheit (10), die eine Emissionsfunktion und eine Lichtempfangsfunktion aufweist;
und
ein Verbindungsrohr (20), das ein mit der optischen Einheit (10) optisch verbundenes Ende und ein anderes abgeschrägtes Ende (30) aufweist, das in den Abgaskanal (110) eingeführt ist und das Laserlicht durchleitet,
wobei das abgeschrägte Ende (30) des Verbindungsrohrs (20) in der Rohrwand (22) gebildet ist, sodass die Rohrwand (22-1) auf der stromaufwärtigen Seite des Gasstroms länger ist als die Rohrwand (22-2) auf der stromabwärtigen Seite;
und wobei
das Verbindungsrohr (20) umfasst:
ein Durchgangsloch (24), das in einer Einführungsenderegion auf einer entgegengesetzten Seite der optischen Einheit (10) in einer Rohrwand (22) vorgesehen ist, wobei sich der eingeführte Abschnitt innerhalb eines Bereichs von dem abgeschrägten Ende (30) des Verbindungsrohrs (20) bis zu kleiner oder gleich der Hälfte einer Gesamtlänge des Verbindungsrohrs (20) befindet;
**dadurch gekennzeichnet, dass**
das Durchgangsloch (24) in der Rohrwand (22-1) in dem abgeschrägten Ende (30) auf einer stromaufwärtigen Seite relativ zu dem Gasstrom vorgesehen ist.

2. Analysevorrichtung (100) nach Anspruch 1, wobei die optische Einheit (10) eine erste optische Einheit mit einer Funktion zum Emittieren des Laserlichts in Richtung des Abgaskanals und eine zweite optische Einheit mit einer Funktion zum Empfangen des von der ersten optischen Einheit emittierten und durch den Abgaskanal (110) geleiteten Laserlichts umfasst und das Verbindungsrohr (20) entsprechend für die erste optische Einheit und die zweite optische Einheit vorgesehen ist.

3. Analysevorrichtung (100) nach Anspruch 1 oder 2, wobei das Verbindungsrohr (20) mit einem Einführungsloch (26) versehen ist, das weiter entfernt auf der Seite der optischen Einheit als das Durchgangsloch (24) ein Spülgas in das Verbindungsrohr (20) einführt.

4. Analysevorrichtung (100) nach einem der Ansprüche 1 bis 3, wobei
mehrere der Durchgangslöcher (24) entlang einer Längsrichtung des Verbindungsrohrs (20) in dem abgeschrägten Ende (30) vorgesehen sind.

5. Analysevorrichtung (100) nach Anspruch 4, wobei mindestens eines der Durchgangslöcher (24) auf der Seite der optischen Einheit von einer Mitte eines Bereichs, der durch das abgeschrägte Ende (30) gebildet ist, in einer Längsrichtung des Verbindungsrohrs (20) vorgesehen ist.

6. Analysevorrichtung (100) nach einem der Ansprüche 1 bis 5, wobei
mehrere der Durchgangslöcher (24) entlang einer Umfangsrichtung des Verbindungsrohrs (20) vorgesehen sind.

7. Analysevorrichtung (100) nach einem der Ansprüche 1 bis 5, wobei
ein Durchmesser des Durchgangslochs (24) größer oder gleich 1/10 eines Durchmessers des Verbindungsrohrs (20) und kleiner oder gleich 1/2 des Durchmessers des Verbindungsrohrs (20) ist.

8. Analysevorrichtung (100) nach einem der Ansprüche 1 bis 7, wobei
eine Durchdringungsrichtung, in der das Durchgangsloch (24) die Rohrwand (22) durchdringt, auf einer Einführungsendeseite des Verbindungsrohrs (20), das in den Abgaskanal (110) eingeführt ist, relativ zu einer Richtung orthogonal zu einer Längsrichtung des Verbindungsrohrs (20) eine Neigung aufweist.

9. Analysevorrichtung (100) nach Anspruch 3, ferner umfassend:
einen Spülgaseinführungsabschnitt (16), der konfiguriert ist, das Spülgas von der Einführungsöffnung (26) in das Verbindungsrohr (20) einzuführen, wobei
der Spülgaseinführungsabschnitt (16) konfiguriert ist,
eine Strömungsgeschwindigkeit des Spülgases in jedem vorbestimmten Intervall zu erhöhen.

10. Analysevorrichtung (100) nach einem der Ansprüche 1 bis 9, wobei
das Verbindungsrohr (20) eine Querschnittsform aufweist, die von einer Richtung einer optischen Achse des Laserlichts aus gesehen stromlinienförmig ist.

11. Analysevorrichtung (100) nach einem der Ansprüche 1 bis 10, wobei
das Durchgangsloch (24) eine konische Form mit einer Öffnung an einer Innenseite des Verbindungsrohrs (20) aufweist, die größer ist als eine Öffnung in einer Außenseite des Verbindungsrohrs.

12. Abgasaufbereitungsvorrichtung, die Abgas aufbereitet, umfassend:
einen Abgaskanal (110), der das Abgas durchströmen lässt; und
eine Analysevorrichtung (100) nach Anspruch 1.

## Revendications

1. Appareil d'analyse (100) qui irradie un carneau (110) avec une lumière laser et analyse un composant contenu dans un gaz qui passe à travers le carneau (110), comprenant :
une unité optique (10) qui a une fonction d'émission et une fonction de réception de lumière, et
un tube de raccordement (20) qui a une extrémité raccordée optiquement à l'unité optique (10) et une autre extrémité biseautée (30) qui est insérée dans le carneau (110) et laisse passer la lumière laser,
dans lequel l'extrémité biseautée (30) du tube de raccordement (20) est formée dans la paroi du tube (22) de sorte que la paroi du tube (22-1) du côté amont du flux de gaz soit plus longue que la paroi du tube (22-2) du côté aval, et dans lequel le tube de raccordement (20) comprend :
un trou traversant (24) prévu dans une paroi de tube (22) dans une région d'extrémité d'insertion sur un côté opposé de l'unité optique (10), la partie insérée étant dans une plage à partir de l'extrémité biseautée (30) du tube de raccordement (20) inférieure ou égale à la moitié d'une longueur totale du tube de raccordement (20) ;
**caractérisé en ce que**
le trou traversant (24) est prévu dans la paroi du tube (22-1) dans l'extrémité biseautée (30) sur un côté amont par rapport au flux de gaz.

2. Appareil d'analyse (100) selon la revendication 1, dans lequel l'unité optique (10) comprend une première unité optique ayant une fonction d'émission de lumière laser vers le carneau et une deuxième unité optique ayant une fonction de réception de lumière laser émise par la première unité optique et passée à travers le carneau (110), et le tube de raccordement (20) est prévu respectivement pour chacune de la première unité optique et la deuxième unité optique.

3. Appareil d'analyse (100) selon la revendication 1 ou 2, dans lequel
le tube de raccordement (20) est pourvu d'un trou d'introduction (26) introduisant un gaz de purge dans le tube de raccordement (20), plus loin du côté de l'unité optique que le trou traversant (24).

4. Appareil d'analyse (100) selon une quelconque des revendications 1 à 3,
dans lequel une pluralité de trous traversants (24) est prévue le long d'une direction longitudinale du tube de raccordement (20) dans l'extrémité biseautée (30).

5. Appareil d'analyse (100) selon la revendication 4, dans lequel
au moins un des trous traversants (24) est prévu sur le côté de l'unité optique d'un centre d'une plage formée par l'extrémité biseautée (30), dans une direction de longueur du tube de raccordement (20).

6. Appareil d'analyse (100) selon une quelconque des revendications 1 à 5, dans lequel une pluralité de trous traversants (24) est prévue le long d'une direction circonférentielle du tube de raccordement (20).

7. Appareil d'analyse (100) selon une quelconque des revendications 1 à 5, dans lequel un diamètre du trou traversant (24) est supérieur ou égal à 1/10 d'un diamètre du tube de raccordement (20) et inférieur ou égal à 1/2 du diamètre du tube de raccordement (20).

8. Appareil d'analyse (100) selon une quelconque des revendications 1 à 7,
dans lequel une direction de pénétration dans laquelle le trou traversant (24) pénètre à travers la paroi du tube (22) comporte une pente sur un côté d'extrémité d'insertion du tube de raccordement (20) qui est inséré dans le carneau (110), par rapport à un direction orthogonale à une direction longitudinale du tube de raccordement (20).

9. Appareil d'analyse (100) selon la revendication 3, comprenant en outre :
une section d'introduction de gaz de purge (16) configurée pour introduire le gaz de purge dans le tube de raccordement (20) à partir du trou d'introduction (26), dans lequel
la section d'introduction de gaz de purge (16) est configurée pour augmenter un débit du gaz de purge dans chaque intervalle prédéterminé.

10. Appareil d'analyse (100) selon une quelconque des revendications 1 à 9, dans lequel le tube de raccordement (20) possède une forme en coupe qui est profilée vue depuis une direction d'un axe optique de la lumière laser.

11. Appareil d'analyse (100) selon une quelconque des revendications 1 à 10, dans lequel le trou traversant (24) possède une forme conique avec une ouverture sur un côté intérieur du tube de raccordement (20) qui est plus grande qu'une ouverture dans un côté extérieur du tube de raccordement.

12. Appareil de traitement des gaz d'échappement qui traite les gaz d'échappement, comprenant :
un carneau (110) qui laisse passer les gaz d'échappement ; et
un appareil d'analyse (100) selon la revendication 1.
